# FASCICULE DE BREVET EUROPEEN

(11) **EP 2 845 799 B1**
(45) Date de publication et mention de la délivrance du brevet: **21.12.2016**
(21) Numéro de dépôt: 14002927.3
(22) Date de dépôt: 22.08.2014
(51) Int. Cl.: B64C 27/00

(54) **Dispositif de suspension antivibratoire d'un élément mécanique et aéronef avec un tel dispositif**
Schwingungsdämpfende Aufhängungsvorrichtung für ein mechanisches Element und Luftfahrzeug mit einem solchen System
Anti-vibration suspension device of a mechanical element and aircraft with such a device

(30) Priorité: 06.09.2013 FR 1302070
(43) Date de publication de la demande: 11.03.2015
(73) Titulaire: Airbus Helicopters, 13725 Marignane Cedex (FR)
(72) Inventeur: Cranga, Paul, 13004 Marseille (FR); Eberhard, Alain, 13880 Velaux (FR); Rodriguez, Jonathan, 13500 Martigues (FR); Rogier, Benoît, 13800 Istres (FR)
(74) Mandataire: GPI & Associés

(56) Documents cités:
- EP-A1- 0 488 845
- FR-A1- 2 795 386
- FR-A1- 2 982 583
- US-A- 4 405 101
- US-A1- 2011 027 081

## Description

La présente invention concerne un dispositif de suspension antivibratoire d'un élément mécanique, et un aéronef muni d'un tel dispositif.

L'invention se situe donc dans le domaine technique restreint des dispositifs pour réduire des vibrations d'aéronefs.

Parmi les aéronefs, on distingue notamment les giravions munis d'au moins un rotor de sustentation lié à une structure porteuse, cette structure porteuse étant dénommée usuellement « cellule » ou encore « fuselage ».

Un tel aéronef comprend de plus une installation motrice mettant en mouvement une boîte de transmission de puissance solidarisée à la structure porteuse de l'aéronef. La boîte de transmission de puissance inclut alors un mât entraînant en rotation le rotor de sustentation.

On note que la boîte de transmission de puissance est souvent reliée à la structure porteuse par une paroi de fond et des moyens de fixation annexes comprenant généralement trois ou quatre barres de maintien obliques. La structure de montage du rotor de sustentation comprenant la boîte de transmission de puissance et les barres de maintien est parfois dénommée « pylône » par l'homme du métier en raison de sa géométrie.

Le rotor de sustentation et la boîte de transmission de puissance forment un ensemble mécanique pouvant être à l'origine de vibrations susceptibles de détériorer le confort des occupants de l'aéronef, en engendrant des mouvements vibratoires et du bruit. De plus, de telles vibrations sont contraignantes pour des équipements de l'aéronef agencés dans la structure porteuse.

Pour assurer un bon niveau de confort dans l'aéronef, il est intéressant d'intégrer un système antivibratoire au plus proche de la source des efforts dynamiques engendrant les vibrations. L'installation d'un système antivibratoire entre cet ensemble mécanique et la structure porteuse est judicieuse. En effet, cette installation permet le traitement de l'ensemble des composantes du torseur d'excitation du rotor de sustentation, sans présenter la complexité et les contraintes d'une intégration dans la partie tournante du rotor de sustentation qui est la principale génératrice des vibrations.

Dès lors, on connaît différents dispositifs de suspension de boîte de transmission de puissance pour au moins réduire les vibrations au sein de l'aéronef, et notamment au sein d'une cabine pour le confort des pilotes et des passagers.

Un tel dispositif de suspension doit pouvoir, d'une part, transmettre les charges statiques transmises par l'ensemble mécanique, et, d'autre part, filtrer les vibrations induites par le rotor. En effet, on constate que ces vibrations sont produites à très basse fréquence et se révèlent alors inconfortables pour les occupants de l'aéronef.

De plus, on comprend qu'un constructeur souhaite obtenir un dispositif de suspension ayant un impact minimal en termes de masse et de coût.

Par ailleurs, on note que certains aéronefs comprennent un rotor de sustentation pouvant évoluer en vol à diverses vitesses de rotation. Il est alors intéressant d'obtenir un dispositif de suspension adapté à ce type de technologie.

Parmi l'état de la technique, on connaît le document FR 2 474 996 qui présente un système de suspension d'un ensemble mécanique d'un hélicoptère.

Ce système de suspension présente quatre barres de maintien obliques et une platine de suspension d'une boîte de transmission de puissance. La platine de suspension comprend une partie centrale solidaire d'un fond de la boîte de transmission de puissance et un bras par barre de maintien oblique. Chaque bras est articulé dans la région de son extrémité proximale d'une part au fuselage et d'autre part à une zone extrémale de la barre de maintien correspondante. L'extrémité distale de chaque bras porte de plus une masse battante dénommée « batteur » faisant travailler le bras en flexion.

Ce système de suspension est très efficace mais son réglage est dépendant de la proportion relative entre les composantes du torseur des efforts s'exerçant en tête rotor, si bien que son réglage n'est pas optimal sur l'ensemble du spectre de vol de l'aéronef. De plus, les comportements des batteurs sont couplés entre eux ce qui implique que la recherche d'un réglage optimal est long et itératif.

On connait aussi les documents US 4311213 et US 4405101.

Selon le document FR 2 747 098, un système de suspension comporte des masses battantes et des moyens de déplacement de ces masses battantes selon une direction longitudinale d'un support.

Dès lors, le dispositif comporte au moins un capteur susceptible de mesurer les valeurs d'au moins un paramètre représentatif d'un critère de performance du dispositif et un calculateur recevant lesdites valeurs pour asservir la position des masses battantes via leurs moyens de déplacement.

Ce dispositif permet alors de lutter contre des vibrations se produisant à une fréquence variable. Cependant, le système se comporte comme un système passif dont le réglage peut être adapté en régime quasi-statique.

Le document FR2982583 décrit un système de suspension antivibratoire comprenant au moins une barre de maintien articulée par une extrémité inférieure à un levier d'un moyen de suspension. Ce levier s'étend d'une extrémité distale supportant au moins une masse battante vers une extrémité proximale articulée à une structure porteuse. Le système de suspension comporte un moyen de rappel en torsion muni d'un actionneur rotatif pour adapter la raideur en torsion du levier aux conditions de vol.

Le document US 5219143 présente un système comportant des actionneurs au sein des barres de maintien d'une boîte de transmission de puissance. Un calculateur délivre un ordre aux actionneurs à partir d'une mesure d'efforts ou d'accélérations. Les efforts dynamiques à générer sont élevés, et impliquent l'utilisation d'actionneurs lourds et coûteux, voire difficiles à entretenir.

Le document US 6.467.723 décrit un système de contrôle de vibrations muni d'actionneurs disposés dans des logements ménagés sur le fuselage. L'inconvénient de ce type de système est que le traitement des vibrations est local et généralement sur un axe unique (vertical ou latéral).

Le document US 2012/0292434 décrit un système de contrôle actif des vibrations implémenté sur le moyeu d'un rotor. Il permet de traiter l'ensemble des composantes du torseur, son inconvénient réside dans la complexité d'installation sur le moyeu.

Le document FR2784350 décrit un système éloigné du domaine de l'invention pour réduire des vibrations provoquées par l'écoulement d'air traversant un rotor et impactant une structure. Le traitement est généralement local et selon seulement une direction unique.

Le document US 2013/0233998 propose un système muni d'un actionneur pour régler une fréquence d'antirésonance. L'actionneur génère un effort statique pour déplacer une masse à cet effet.

On connait aussi les documents US 2011/027081, FR 2795386 et EP 0488845.

La présente invention a alors pour objet de proposer un dispositif de suspension pour un ensemble mécanique d'aéronef muni d'une boîte de transmission de puissance et d'un rotor de sustentation, ce dispositif de suspension demeurant efficace pour différentes configurations et conditions de vol de l'aéronef afin de minimiser les vibrations gênantes notamment perçues par les pilotes et passagers.

Selon l'invention un dispositif de suspension antivibratoire d'un ensemble mécanique est muni d'au moins un moyen de suspension, le moyen de suspension comprenant un batteur effectuant un mouvement de balancier, le batteur étant muni d'un support de masse qui s'étend d'une extrémité distale supportant au moins une masse battante vers une extrémité proximale, cette extrémité proximale étant munie d'une première articulation pour articuler le support de masse à une structure porteuse à isoler, le moyen de suspension ayant une deuxième articulation pour articuler une barre de maintien de l'ensemble mécanique au support de masse entre l'extrémité distale et l'extrémité proximale.

De plus, le dispositif de suspension comporte au moins un générateur d'efforts agissant sur l'amplitude et la phase du mouvement de balancier du batteur, le dispositif de suspension ayant au moins un calculateur relié au générateur d'efforts et à un système de mesure mesurant une réponse vibratoire de la structure porteuse et pour régler activement cette amplitude et cette phase en contrôlant le générateur d'efforts en fonction d'au moins un signal de mesure provenant du système de mesure tel que défini par la revendication 1.

Chaque moyen de suspension comporte alors un batteur articulé à une barre de maintien d'un ensemble mécanique et à une structure porteuse. Ce dispositif de suspension est de plus un système actif antivibratoire réglant l'amplitude et la phase du mouvement de balancier du batteur en fonction des informations mesurées par le système de mesure. Dans le cadre d'un aéronef, le dispositif de suspension travaille alors de fait à un point de réglage optimal quels que soient la configuration de vol et le chargement de l'aéronef, contrairement à un système passif.

Le dispositif de suspension intègre un générateur d'efforts actif dans un moyen de suspension muni d'un batteur en utilisant une mesure des vibrations de la structure porteuse. Le générateur d'efforts actif vient générer un effort dynamique permettant de contrer les efforts d'excitation de la structure porteuse.

A cet effet, le calculateur peut comprendre un circuit logique, un microcontrôleur, un microprocesseur ou encore par exemple au moins un processeur exécutant des instructions mémorisées d'un algorithme de contrôle pour contrôler le générateur d'efforts. Toute unité apte à générer un ordre en fonction d'une donnée d'entrée peut donc être implémentée.

Le système de mesure de niveaux vibratoires peut être muni d'au moins un accéléromètre ou d'au moins un capteur de mesure d'efforts disposé sur la structure porteuse. En fonction des mesures effectuées, le calculateur modifie l'amplitude et la phase du mouvement du batteur selon l'algorithme de contrôle.

Le générateur d'efforts peut être de type hydraulique, pneumatique, électromécanique, électromagnétique, ou encore piézoélectrique par exemple. Le générateur d'efforts peut être de dimensions restreintes, l'effort à fournir pour contrôler le batteur étant modéré du fait de l'amplification cinématique du batteur.

Ainsi, le générateur d'efforts permet d'adapter en permanence la phase et l'amplitude des efforts générés par le batteur de manière à au moins minimiser les vibrations générées par l'ensemble mécanique sur la structure porteuse. Cette minimisation des vibrations peut être obtenue quelles que soient la fréquence d'excitation de la structure porteuse et la répartition des efforts entre une pluralité de barres de maintien le cas échéant. En effet, le calculateur contrôle le générateur d'efforts en fonction des informations provenant du système de mesure.

La commande élaborée par le calculateur est en effet fonction des informations transmises par au moins un accéléromètre et / ou au moins une cellule d'efforts disposés sur la structure porteuse par exemple.

Ce dispositif permet de « personnaliser » le traitement des vibrations dans une zone privilégiée. Par exemple, le système de mesure comporte un capteur disposé dans une cabine, pour que le calculateur contrôle le générateur d'efforts afin de minimiser les vibrations ressenties dans cette cabine.

Contrairement à un moyen de suspension passif à lame battante, l'invention tend à minimiser des vibrations en permanence, et non pas dans une configuration donnée correspondant au réglage du moyen de suspension.

En outre, l'invention permet ainsi l'atténuation de vibrations sur une large bande de fréquences. L'invention possède donc un intérêt non négligeable sur un aéronef ayant une voilure pouvant être en rotation selon une pluralité de régimes, générant de fait des vibrations selon des bandes de fréquences distinctes.

De plus, un éventuel couplage entre des batteurs de plusieurs moyens de suspension peut être directement pris en compte par le calculateur.

Par rapport à un système de contrôle actif agencé dans une cabine d'un aéronef ayant un rotor de sustentation, l'invention propose un moyen de suspension actif pouvant être intégré entre une boîte de transmission de puissance entraînant ce rotor de sustentation et une structure porteuse de l'aéronef. Le moyen de suspension est donc disposé le long du chemin direct des efforts dynamiques transmis par l'ensemble tournant à la structure porteuse.

Cet agencement permet de contrôler toutes les composantes du torseur d'excitation en tête du rotor de sustentation, alors qu'un système actif en cabine ne filtre les vibrations que selon une direction.

De plus, cet agencement peut permettre de réduire les vibrations sur l'ensemble de la structure porteuse, alors qu'il peut exister des zones où les vibrations vont diminuer et d'autres zones où les vibrations vont augmenter avec un système actif en cabine.

Le dispositif de suspension peut comporter une ou plusieurs des caractéristiques qui suivent.

Ainsi, le dispositif de suspension comprend un élément élastique par batteur pour apporter de la raideur entre l'ensemble mécanique et la structure porteuse.

L'élément élastique apporte la raideur nécessaire à la transmission des charges statiques, et est monté en parallèle du dispositif de suspension.

Selon une réalisation, l'élément mécanique peut comprendre aussi une pluralité de barres de maintien. Chaque barre de maintien peut alors être articulée à son propre moyen de suspension.

De plus, le dispositif de suspension peut alors comprendre un générateur d'efforts pour chaque moyen de suspension.

De même, le dispositif de suspension peut comprendre un calculateur par générateur d'efforts, ou encore un calculateur relié à chaque générateur d'efforts.

Par ailleurs, le dispositif de suspension peut comporter un moyen de fixation pour fixer au moins un générateur d'efforts à la structure porteuse.

Ce dispositif de suspension peut comporter un système de fixation pour fixer au moins un générateur d'efforts à l'ensemble mécanique.

Ce dispositif de suspension peut comporter un organe de fixation pour fixer au moins un générateur d'efforts audit batteur.

Ainsi, selon la variante, un générateur d'efforts peut par exemple :
- être interposé entre la structure porteuse et le batteur,
- être interposé entre la structure porteuse et l'ensemble mécanique,
- être interposé entre le batteur et l'ensemble mécanique

Selon une version, le générateur d'efforts est par exemple un actionneur électromagnétique comprenant une masse magnétique, au moins une bobine et un amplificateur de puissance électrique relié à chaque bobine et au calculateur.

Deux jeux de bobines peuvent être prévus pour couvrir des actions antivibratoires sur par exemple deux plages de fréquences distinctes.

Par exemple, chaque bobine peut être fixée sur une masse battante de manière à être traversée par la masse magnétique. La masse magnétique peut être fixée à l'ensemble mécanique. La bobine est alimentée électriquement par l'amplificateur de puissance, en étant contrôlée par le calculateur qui élabore un ordre de commande en fonction des informations provenant du système de mesure.

Un tel générateur d'efforts présente l'avantage d'avoir une masse relativement réduite et de minimiser les efforts à fournir pour agir sur le batteur.

Par ailleurs, le système de mesure peut comprendre un moyen d'attachement pour être attaché à une structure porteuse. Ce système de mesure peut être attaché dans des zones prédéterminées, pour minimiser les vibrations dans ces zones en particulier.

Selon une version, le générateur d'efforts est relié à la masse battante, par exemple pour représenter au moins une partie de la masse battante ce qui permet notamment de simplifier le dispositif. De plus, cet agencement permet de minimiser les efforts à fournir pour modifier l'amplitude et/ou la phase de battement du batteur en maximisant la distance séparant le générateur d'efforts de l'extrémité proximale du batteur.

Selon une réalisation, le générateur d'efforts comporte au moins une bobine solidaire de la masse battante et une masse magnétique, la masse magnétique étant reliée à la masse battante par un corps élastique.

Selon une autre réalisation, le générateur d'efforts comporte un organe piézoélectrique intégré au support de masse du batteur, et relié à la masse battante du batteur.

Selon une autre réalisation, le générateur d'efforts comporte au moins une paire de masses contrarotatives portées par la masse battante. La fréquence de rotation des masses contrarotatives détermine la fréquence de l'effort dynamique généré par le batteur, la position angulaire des masses contrarotatives l'une par rapport à l'autre masse contrarotative déterminant l'amplitude et la phase de cet effort dynamique.

L'invention vise de plus un aéronef muni d'une structure porteuse et d'un ensemble mécanique comprenant un rotor de sustentation et une boîte de transmission de puissance entraînant ce rotor de sustentation, l'ensemble mécanique comprenant au moins une barre de maintien s'étendant d'une extrémité supérieure articulée à la boîte de transmission de puissance vers une extrémité inférieure.

Cet aéronef comporte un dispositif de suspension du type décrit précédemment, au moins une extrémité inférieure d'une barre de maintien étant articulée à une deuxième articulation d'un moyen de suspension du dispositif de suspension.

Chaque barre de maintien est éventuellement articulée à un moyen de suspension selon l'invention.

L'invention et ses avantages apparaîtront avec plus de détails dans le cadre de la description qui suit avec des exemples de réalisation donnés à titre illustratif en référence aux figures annexées qui représentent :
- la figure 1, une vue schématique d'un aéronef selon l'invention,
- la figure 2, une vue schématique d'un dispositif de suspension,
- les figures 3 à 9, des vues schématiques de réalisations de l'invention d'un dispositif de suspension selon l'invention,

Les éléments présents dans plusieurs figures distinctes sont affectés d'une seule et même référence.

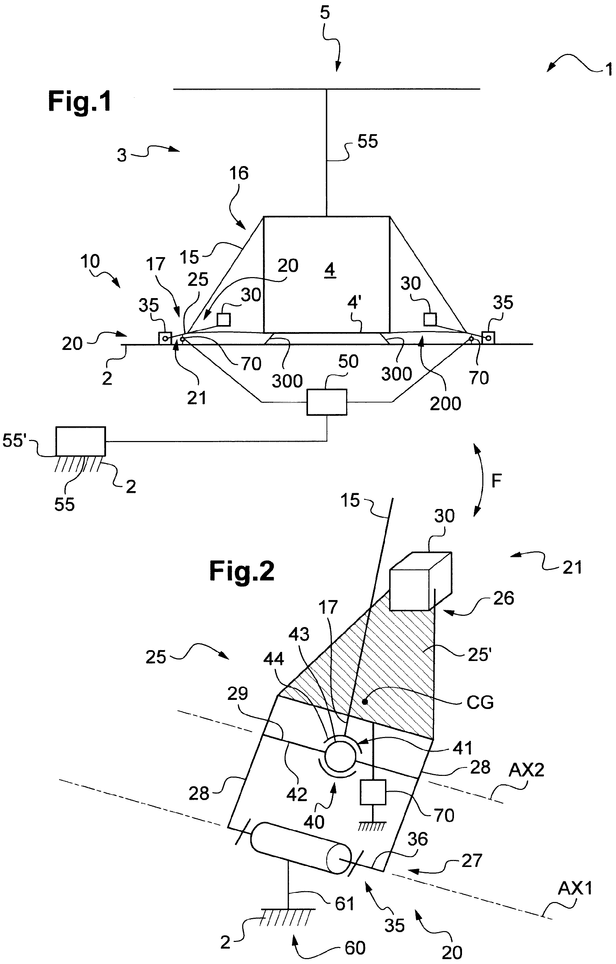

La figure 1 présente un aéronef 1 comportant une structure porteuse 2. De plus, l'aéronef 1 est muni d'un ensemble mécanique 3 fixé à la structure porteuse 2 pour participer notamment à la sustentation de l'aéronef 1.

Cet ensemble mécanique 3 inclut un rotor de sustentation 5, une boîte de transmission de puissance 4 de l'ensemble mécanique 3 étant interposée entre le rotor de sustentation 5 et une installation motrice non représentée sur les figures.

En effet, la représentation de l'aéronef sur les figures est délibérément incomplète pour ne pas alourdir inutilement ces figures.

La boîte de transmission de puissance 4 repose sur la structure porteuse 2 par le biais d'une membrane 300, reprenant le couple et assurant la cinématique de la transmission.

Cet aéronef 1 comprend un dispositif de suspension qui permet d'une part de réduire les vibrations transmis par l'ensemble mécanique 3, et d'autre part de fixer l'ensemble mécanique 3 à la structure porteuse.

L'ensemble mécanique 3 inclut au moins une barre de maintien 15, voire au moins trois barres de maintien 15 pour sa fixation à la structure porteuse. Chaque barre de maintien s'étend alors d'une extrémité supérieure 16 vers une extrémité inférieure 17. Dès lors, chaque extrémité supérieure 16 est articulée à la boîte de transmission de puissance 4 et notamment à une partie supérieure de cette boîte de transmission de puissance 4, alors que chaque extrémité inférieure 17 est reliée indirectement à la structure porteuse 2.

Dès lors, le dispositif de suspension comporte au moins un moyen de suspension 20 interfacé entre une barre de maintien 15 et la structure porteuse 2. Par exemple, le dispositif de suspension comporte un moyen de suspension par barre de maintien articulé à la structure porteuse et à l'extrémité inférieure 17 de la barre de maintien correspondante.

Chaque moyen de suspension 20 comprend un batteur 21 muni d'un moyen de support 25 qui porte une masse battante 30 ainsi que l'extrémité inférieure 17 d'une barre de suspension. Le moyen de support 25 peut être un levier ou une lame.

La figure 2 détaille un moyen de suspension 20 selon l'invention.

Le moyen de support 25 peut comprendre une zone plate 25' prolongée par deux bras longitudinaux 28 qui sont liés par un bras transversal 29 de manière à présenter une forme en H. Le batteur s'étend alors longitudinalement d'une extrémité dite « extrémité proximale 27 » vers une extrémité dite « extrémité distale 26 ».

La masse battante est alors portée par l'extrémité distale 26 du batteur.

De plus, l'extrémité proximale 27 est munie d'une première articulation 35 permettant d'articuler le moyen de support 25 à la structure porteuse 2.

Cette première articulation 35 comporte éventuellement une liaison pivot permettant la rotation du moyen de support, et de fait de la masse battante 30 autour d'une première direction AX1.

Par suite, la première articulation peut comprendre une ferrure 60 pouvant être fixée à la structure porteuse 2. Un premier axe de pivot 36 de la première articulation peut alors traverser au moins une joue 61 de cette ferrure 60.

En outre, le moyen de suspension comprend une deuxième articulation 40 pour articuler une barre de maintien 15 au moyen de support 25 à proximité de la première articulation. Par exemple, la deuxième articulation 40 est agencée dans une zone comprise entre le centre de gravité Cg du batteur et la première articulation 35.

Cette deuxième articulation 40 peut inclure au minimum une liaison pivot. La deuxième articulation peut avantageusement être une liaison à rotule munie d'un deuxième axe de liaison 42 représenté par le bras transversal 29. Le deuxième axe de liaison 42 traverse une partie interne sphérique 43 d'une rotule, cette partie interne sphérique 43 étant disposée dans une cage 44 de la partie inférieure 17 d'une barre de maintien 15.

Le deuxième axe de liaison 42 est dirigé selon une deuxième direction AX2 parallèle à la première direction AX1.

La deuxième articulation 40 est décalée par rapport à la première articulation 35 permettant ainsi une amplification cinématique du mouvement de la masse battante 30 provoqué par un mouvement relatif entre la structure porteuse 2 et la boîte de transmission 4.

En outre, le dispositif de suspension comprend un élément élastique 200 par moyen de suspension, qui apporte la raideur nécessaire pour reprendre les efforts statiques transitant dans les barres de maintien 15. Cet élément élastique 200 est réalisé sur la figure 1 par une lame travaillant en flexion, solidaire des bras 28 du batteur et reposant à son extrémité sur le fond 4' de la boîte de transmission. Dans d'autres variantes, l'élément élastique 200 peut être constitué d'un tube de torsion monté au niveau de la première articulation 35 entre la ferrure 60 et le batteur 21, ou encore par le biais d'un ressort agencé entre un batteur 21 et la structure porteuse par exemple.

De plus, le dispositif de suspension peut comprendre au moins un générateur d'efforts 70 pour contrôler l'amplitude et la phase du mouvement oscillatoire d'un batteur 21.

En référence à la figure 1, le dispositif de suspension 10 peut comprendre un générateur d'efforts 70 intégré à chaque moyen de suspension. Ce générateur d'efforts peut être un actionneur hydraulique, pneumatique, électromécanique, électromagnétique, ou encore piézoélectrique.

Le dispositif de suspension 10 comporte en outre au moins un calculateur 50 relié à un système de mesure 55 mesurant la réponse vibratoire de la structure porteuse par des accéléromètres ou des capteurs d'effort. Par exemple, des accéléromètres sont collés à la structure porteuse 2.

Chaque générateur d'efforts 70 communique alors avec un calculateur 50, le calculateur 50 contrôlant activement l'amplitude et la phase du mouvement du batteur en donnant des ordres au générateur d'efforts 70 en fonction d'au moins un signal de mesure provenant du système de mesure 55.

Le dispositif de suspension peut comprendre un calculateur pour chaque générateur d'efforts 70, ou encore un unique calculateur 50 contrôlant tous les générateurs d'efforts 70 du dispositif de suspension 10.

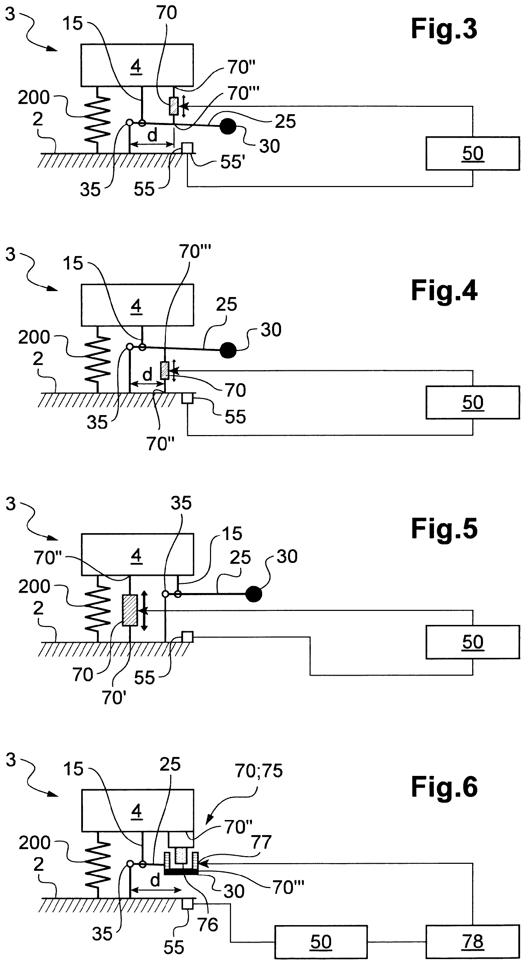

En référence aux figures 3 à 9, le dispositif de suspension peut comprendre : un moyen de fixation 70' pour fixer au moins un générateur d'efforts 70 à la structure porteuse 2, un système de fixation 70" pour fixer au moins un générateur d'efforts 70 à l'ensemble mécanique 3, un organe de fixation 70"' pour fixer au moins un générateur d'efforts 70 au batteur.

Ainsi, selon la figure 3, le générateur d'efforts 70 peut être interposé entre le batteur et l'ensemble mécanique 3 en leur étant attaché par des moyens usuels.

Dans cette configuration, la distance d séparant la première articulation 35 du point d'attachement du générateur d'efforts 70 au support de masse 25 est favorablement maximisée pour réduire les efforts à délivrer.

Selon la figure 4, le générateur d'efforts 70 peut être interposé entre le batteur et la structure porteuse 2 en leur étant attaché par des moyens usuels.

Selon la figure 5, le générateur d'efforts 70 peut être interposé entre l'ensemble mécanique 3 et la structure porteuse 2 en leur étant attaché par des moyens usuels.

Selon les figures 6 à 9, le générateur d'efforts 70 est relié à l'extrémité distale 26 du batteur, et donc à la masse battante.

Selon la figure 6, le générateur d'efforts 70 est interposé entre l'ensemble mécanique 3 et la masse battante.

Par exemple, le générateur d'efforts 70 inclut un actionneur électromagnétique 75 qui comprend une masse magnétique 76 fixée à la boîte de transmission de puissance 4. De plus, l'actionneur électromagnétique 75 possède au moins une bobine 77 fixée à la masse battante 30, voire un amplificateur 78 de puissance électrique relié à ladite bobine 77 et audit calculateur 50. La bobine 77 et la masse battante peuvent constituer une seule et même entité physique.

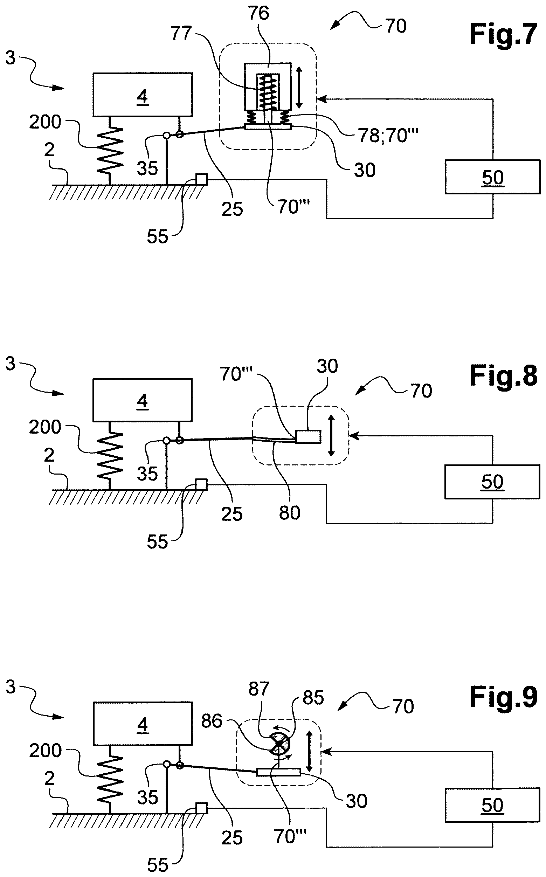

Selon les figures 7 à 9, le générateur d'efforts est simplement attaché à l'extrémité distale du moyen de suspension.

La figure 7 présente un générateur d'efforts pourvu d'au moins une bobine 77 solidaire de la masse battante 30. De plus, le générateur d'efforts comprend une masse magnétique 76 élastiquement attachée à la masse battante 30 par un corps élastique 78, tel qu'un ressort. La masse magnétique est alors mobile par rapport à la masse battante. Chaque bobine peut s'étendre dans un logement de la masse magnétique.

Chaque bobine 77 communique alors avec un calculateur 50, via un amplificateur de puissance éventuellement.

La figure 8 illustre un générateur d'efforts qui est pourvu d'un organe piézoélectrique 80. Cet actionneur électromagnétique 75 est intégré au support de masse 25 et porte la masse battante 30.

La figure 9 présente un générateur d'efforts comportant deux masses contrarotatives 86, 87 portées par la masse battante 30. Au moins un moteur 85 met en rotation les masses contrarotatives. Un moteur peut aussi régler le déphasage angulaire des masses contrarotatives.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de suspension (10) antivibratoire d'un ensemble mécanique (3) muni d'au moins un moyen de suspension (20), le moyen de suspension (20) comprenant un batteur (21) effectuant un mouvement de balancier, le batteur (21) étant muni d'un support de masse (25) qui s'étend d'une extrémité distale (26) supportant au moins une masse battante (30) vers une extrémité proximale (27), cette extrémité proximale (27) étant munie d'une première articulation (35) pour articuler le support de masse (25) à une structure porteuse (2) à isoler, le moyen de suspension (20) ayant une deuxième articulation (40) pour articuler une barre de maintien (15) dudit ensemble mécanique au support de masse (25) entre ladite extrémité distale (26) et ladite extrémité proximale (27),
**caractérisé en ce que** ledit dispositif de suspension (10) comporte au moins un générateur d'efforts (70) dynamiques agissant sur l'amplitude et la phase du mouvement de balancier dudit batteur (21), ledit dispositif de suspension (10) ayant au moins un calculateur (50) relié audit générateur d'efforts (70) et à un système de mesure (55) mesurant une réponse vibratoire de ladite structure pour régler activement ladite amplitude et ladite phase en contrôlant le générateur d'efforts (70) en fonction d'au moins un signal de mesure provenant dudit système de mesure (55), le générateur d'efforts (70) étant attaché à la masse battante (30).

2. Dispositif selon la revendication 1,
**caractérisé en ce que** ledit dispositif de suspension (10) comporte un système de fixation (70") pour fixer au moins un générateur d'efforts (70) audit ensemble mécanique (3).

3. Dispositif selon l'une quelconque des revendications 1 à 2,
**caractérisé en ce que** ledit dispositif de suspension (10) comporte un organe de fixation (70"') pour fixer au moins un générateur d'efforts (70) audit batteur (21).

4. Dispositif selon l'une quelconque des revendications 1 à 3,
**caractérisé en ce que** ledit générateur d'efforts (70) est un actionneur électromagnétique (75) comprenant une masse magnétique (76), au moins une bobine (77) et un amplificateur (78) de puissance électrique relié à ladite bobine (77) et audit calculateur (50).

5. Dispositif selon la revendication 4,
**caractérisé en ce que** ladite bobine (77) est agencée sur ladite masse battante (30).

6. Dispositif selon l'une quelconque des revendications 1 à 5,
**caractérisé en ce que** le système de mesure (55) comprend un moyen d'attachement (55') à une structure porteuse (2).

7. Dispositif selon l'une quelconque des revendications 1 à 6,
**caractérisé en ce que** ledit générateur d'efforts (70) comporte au moins une bobine (77) solidaire de ladite masse battante (30) et une masse magnétique (76), la masse magnétique étant reliée à la masse battante par un corps élastique.

8. Dispositif selon l'une quelconque des revendications 1 à 7,
**caractérisé en ce que** ledit générateur d'efforts (70) comporte un organe piézoélectrique (80) intégré au support de masse (25).

9. Dispositif selon l'une quelconque des revendications 1 à 8,
**caractérisé en ce que** ledit générateur d'efforts (70) comporte au moins une paire de masses contrarotatives (86, 87) portées par ladite masse battante (30).

10. Dispositif selon l'une quelconque des revendications 1 à 9,
**caractérisé en ce que** le dispositif de suspension (10) comprend un élément élastique (200) par batteur pour apporter de la raideur entre l'ensemble mécanique (3) et la structure porteuse (2).

11. Dispositif selon l'une quelconque des revendications 1 à 10,
**caractérisé en ce que** le dispositif de suspension (10) comprend un générateur d'efforts (70) pour chaque moyen de suspension (20).

12. Dispositif selon l'une quelconque des revendications 1 à 11,
**caractérisé en ce que** le dispositif de suspension (10) comprend un calculateur (50) pour chaque générateur d'efforts (70).

13. Aéronef (1) muni d'une structure porteuse (2) et d'un ensemble mécanique (3) comprenant un rotor de sustentation (5) et une boîte de transmission de puissance (4) entraînant ce rotor de sustentation (5), ledit ensemble mécanique (3) comprenant au moins une barre de maintien (15) s'étendant d'une extrémité supérieure (16) articulées à la boîte de transmission (4) vers une extrémité inférieure (17),
**caractérisé en ce que** cet aéronef (1) comporte un dispositif de suspension (10) selon l'une quelconque des revendications 1 à 12, au moins une extrémité inférieure (17) d'une barre de maintien (15) étant articulée à la deuxième articulation (40) d'un moyen de suspension (20) du dispositif de suspension (10).

14. Aéronef (1) selon la revendication 13,
**caractérisé en ce que** chaque barre de maintien (15) est articulée à un moyen de suspension (20).

## Patentansprüche

1. Schwingungsdämpfende Aufhängungsvorrichtung (10) einer mechanischen Baugruppe (3) mit mindestens einer Aufhängung (20), wobei die Aufhängung (20) einen Schläger (21) aufweist, der eine Pendelbewegung ausführt, wobei der Schläger (21) mit einer Masseabstützung (25) versehen ist, die sich von einem distalen Ende (26), die mindestens eine Pendelmasse (30) trägt, zu einem proximalen Ende (27) erstreckt, wobei das proximale Ende (27) mit einem ersten Gelenk (35) versehen ist, um die Masseabstützung (25) an einer zu isolierenden Trägerstruktur (2) anzulenken, wobei die Aufhängung (20) ein zweites Gelenk (40) aufweist, um eine Stange (15) zum Haltern der mechanischen Baugruppe an der Masseabstützung (25) zwischen dem distalen Ende (26) und dem proximalen Ende (27) anzulenken,
**dadurch gekennzeichnet, dass** die Aufhängungsvorrichtung (10) mindestens einen Erzeuger (70) dynamischer Kräfte aufweist, die auf die Amplitude und die Phase der Pendelbewegung des Schlägers (21) einwirken, wobei die Aufhängungsvorrichtung (10) mindestens einen Rechner (50) aufweist, der mit dem Krafterzeuger (70) und mit einem Messsystem (55) verbunden ist, das eine Schwingungsantwort der Struktur misst, um aktiv die Amplitude und die Phase zu regein, indem der Kratterzeuger (70) in Abhangigkeit von mindestens einem Messsignal, das von dem Messsystem (55) stammt, gesteuert wird, wobei der Krafterzeuger (70) an der Pendelmasse (30) befestigt ist.

2. Vorrichtung nach Anspruch 1,
**dadurch gekennzeichnet, dass** die Aufhängungsvorrichtung (10) ein Befestigungssystem (70") aufweist, um mindestens einen Krafterzeuger (70) an der mechanischen Baugruppe (3) zu befestigen.

3. Vorrichtung nach einem der Ansprüche 1 bis 2,
**dadurch gekennzeichnet, dass** die Aufhängungsvorrichtung (10) ein Befestigungsorgan (70"') aufweist, um mindestens einen Krafterzeuger (70) an dem Schläger (21) zu befestigen.

4. Vorrichtung nach einem der Ansprüche 1 bis 3,
**dadurch gekennzeichnet, dass** der Krafterzeuger (70) ein elektromagnetischer Krafterzeuger (75) ist, der eine magnetische Masse (76), mindestens eine Spule (77) und einen elektrischen Leistungsverstärker (78), der mit der Spule (77) und dem Rechner (50) verbunden ist, aufweist.

5. Vorrichtung nach Anspruch 4,
**dadurch gekennzeichnet, dass** die Spule (77) auf der Pendelmasse (30) angeordnet ist.

6. Vorrichtung nach einem der Ansprüche 1 bis 5,
**dadurch gekennzeichnet, dass** das Messsystem (55) ein Mittel (55') zur Befestigung an einer Trägerstruktur (2) aufweist.

7. Vorrichtung nach einem der Ansprüche 1 bis 6,
dadurch gekenntzeichnet, dass der Krafterzeuger (70) mindestens eine Spule (77) aufweist, die mit der Pendelmasse (30) fest verbunden ist, und eine magnetische Masse (76) aufweist, wobei die magnetische Masse mit der Pendelmasse über einen elastischen Körper verbunden ist.

8. Vorrichtung nach einem der Ansprüche 1 bis 7,
**dadurch gekennzeichnet, dass** der Krafterzeuger (70) ein in der Masseabstützung (25) integriertes piezoelektrisches Element (80) aufweist.

9. Vorrichtung nach einem der Ansprüche 1 bis 8,
**dadurch gekennzeichnet, dass** der Krafterzeuger (70) mindestens ein Paar gegenläufig rotierende Massen (86, 87) aufweist, die von der Pendelmasse (30) getragen werden.

10. Vorrichtung nach einem der Ansprüche 1 bis 9,
**dadurch gekennzeichnet, dass** die Aufhängungsvorrichtung (10) ein elastisches Element (200) pro Schläger aufweist, um die Verbindung zwischen der mechanischen Baugruppe (3) und der Trägerstruktur (2) zu versteifen.

11. Vorrichtung nach einem der Anspruche 1 bis 10,
**dadurch gekennzeichnet, dass** die Aufhängungsvorrichtung (10) einen Krafterzeuger (70) für jede Aufhängung (20) aufweist.

12. Vorrichtung nach einem der Ansprüche 1 bis 11,
**dadurch gekennzeichnet, dass** die Auflzängungsvorrichtung (10) einen Rechner (50) für jeden Krafterzeuger (70) aufweist.

13. Luftfahrzeug (1) mit einer Trägerstruktur (2) und einer mechanischen Baugruppe (3), die einen Auftrieb erzeugenden Rotor (5) und ein Leistungsgetriebe (4), das den Auftrieb erzeugenden Rotor (5) antreibt, aufweist, wobei die mechanische Baugruppe (3) mindestens eine Haltestange (15) aufweist, die sich von einem oberen Ende (16), das an dem Getriebe (4) angelenkt ist, bis zu einem unteren Ende (17) erstreckt,
**dadurch gekennzeichnet, dass** dieses Luftfahrzeug (1) eine Aufhängungsvorrichtung (10) nach einem der Ansprüche 1 bis 12 aufweist, wobei mindestens ein unteres Ende (17) einer Haltestange (15) an dem zweiten Gelenk (40) einer Aufhängung (20) der Aufhängungsvorrichtung (10) angelenkt ist.

14. Luftfahrzeug (1) nach Anspruch 13,
**dadurch gekennzeichnet, dass** die Haltestange (15) an der Aufhängung (20) angelenkt ist.

## Claims

1. Antivibratory suspension device (10) for a mechanical assembly (3) provided with at least one suspension means (20), the suspension means (20) comprising a flapper (21) performing a pendulum motion, the flapper (21) being provided with a mass support (25) which extends from a distal end (26) supporting at least one flapping mass (30) to a proximal end (27), the proximal end (27) being provided with a first articulation (35) for articulating the mass support (25) to a carrier structure (2) to be isolated, the suspension means (20) having a second articulation (40) for articulating a holder bar (15) of said mechanical assembly to the mass support (25) between said distal end (26) and said proximal end (27), **characterised in that** said suspension device (10) comprises at least one dynamic force generator (70) acting on the amplitude and the phase of the pendulum motion of said flapper (21), said suspension device (10) having at least one computer (50) connected to said force generator (70) and to a measurement system (55) measuring a vibratory response of said structure to adjust said amplitude and said phase actively by controlling the force generator (70) as a function of at least one measurement signal coming from said measurement system (55), the force generator (70) being attached to the flapping mass (30).

2. Device according to claim 1,
**characterised in that** said suspension device (10) comprises a fastening system (70") for fastening at least one force generator (70) to said mechanical assembly (3).

3. Device according to any one of claims 1 to 2,
**characterised in that** said suspension device (10) comprises a fastening member (70"') for fastening at least one force generator (70) to said flapper (21).

4. Device according to any one of claims 1 to 3,
**characterised in that** said force generator (70) is an electromagnetic actuator (75) comprising a magnetic mass (76), at least one coil (77) and an electrical power amplifier (78) connected to said coil (77) and to said computer (50).

5. Device according to claim 4,
**characterised in that** said coil (77) is arranged on said flapping mass (30).

6. Device according to any one of claims 1 to 5,
**characterised in that** said measurement system (55) comprises an attachment means (55') for attachment to a carrier structure (2).

7. Device according to any one of claims 1 to 6,
**characterised in that** said force generator (70) comprises at least one coil (77) secured to said flapping mass (30) and a magnetic mass (76), the magnetic mass being connected to the flapping mass by an elastic body.

8. Device according to any one of claims 1 to 7,
**characterised in that** said force generator (70) comprises a piezoelectric member (80) incorporated in the mass support (25).

9. Device according to any one of claims 1 to 8,
**characterised in that** said force generator (70) comprises at least one pair of contrarotating masses (86, 87) carried by said flapping mass (30).

10. Device according to any one of claims 1 to 9,
**characterised in that** said suspension device (10) comprises one elastic element (200) per flapper in order to provide stiffness between the mechanical assembly (3) and the carrier structure (2).

11. Device according to any one of claims 1 to 10,
**characterised in that** the suspension device (10) comprises one force generator (70) for each suspension means (20).

12. Device according to any one of claims 1 to 11,
**characterised in that** the suspension device (10) comprises one computer (50) for each force generator (70).

13. Aircraft (1) provided with a carrier structure (2) and a mechanical assembly (3) comprising a lift rotor (5) and a power transmission gearbox (4) driving the lift rotor (5), said mechanical assembly (3) comprising at least one holding bar (15) extending from a top end (16) articulated to the transmission gearbox (4) to a bottom end (17),
**characterised in that** the aircraft (1) comprises a suspension device (10) according to any one of claims 1 to 12, at least one bottom end (17) of a holding bar (15) being articulated to the second articulation (40) of a suspension means (20) of the suspension device (10).

14. Aircraft (1) according to claim 13,
**characterised in that** each holding bar (15) is articulated to a suspension means (20).
